# EUROPÄISCHE PATENTANMELDUNG

(11) **EP 0 768 171 A2**
(43) Veröffentlichungstag der Anmeldung: **16.04.1997**
(21) Anmeldenummer: 96114216.3
(22) Anmeldetag: 05.09.1996
(51) Int. Cl.: B32B 27/18, B32B 27/32

(54) **Siegel- und bedruckbare orientierte Polyolefin-Mehrschichtfolie**

(30) Priorität: 18.09.1995 DE 19534625
(71) Anmelder: WOLFF WALSRODE AG, D-29655 Walsrode (DE)
(72) Erfinder: Benkhoff, Hermann, Dipl.-Ing., 27356 Rothenburg/Wümme (DE)
(74) Vertreter: Braun, Rolf, Dr.

(57) **Zusammenfassung**

Die vorliegende Erfindung betrifft eine wenigstens monoaxial gereckte mehrschichtige Polypropylenfolie, enthaltend ein Polydimethylsiloxan in der nicht corona-, fluor-, flamm- oder plasmabehandelten Folienaußenschicht und eine Gleitmittelkombination, bestehend aus Erucasäureamid und Polydimethylsiloxan in der corona-, fluor-, flamm- oder plasmabehandelten Folienaußenschicht.

## Beschreibung

Die vorliegende Erfindung betrifft eine mindestens monoaxial orientierte, transparente, beidseitig siegelbare und einseitig bedruckbare Polyolefin-Mehrschichtfolie aus drei Schichten, wobei die Basisschicht im wesentlichen aus Polypropylen-Polymeren und die beiden Außenschichten im wesentlichen aus siegelfähigen Polyolefin-Polymeren bestehen, die sich durch eine verbesserte Maschinengängigkeit auf schnellaufenden Verarbeitungs- und Verpackungsmaschinen unter Beibehaltung der guten Optik, der guten Siegeleigenschaften und der guten Bedruckbarkeit auszeichnet.

Transparente, beidseitig siegelfähige und einseitig bedruckbare biaxial orientierte Mehrschicht-Polyolefinfolien finden ihre Anwendung in der Verpackung von Lebensmitteln, wie z.B. Keksen, Bonbons, schokoladenhaltige Produkte, Backpulver u.a.m. auf insbesondere Schnellaufmaschinen. Aufgrund der einseitigen Bedruckbarkeit und der beidseitigen Siegelfähigkeit werden große Mengen der transparenten biaxial gereckten Polyolefin-Mehrschichtfolien in bedruckter und unbedruckter Form in Folienverbunden eingesetzt.

Verarbeitungsprobleme können sich zum einen bei der Bedruckung und Kaschierung der coronabehandelten Folienaußenseite und zum anderen der Maschinengängigkeit der gegenüberliegenden siegelfähigen coronaunbehandelten Folienaußenseite ergeben. Darüber hinaus ist die Maschinengängigkeit an der coronabehandelten unbedruckten Folienseite häufig nicht ausreichend. Es ist allgemein bekannt, daß zur Optimierung der entsprechenden Folieneigenschaften die Polyolefin- Mehrschichtfolien mit unterschiedlichen Antiblock-, Antistatik- und Gleitmitteln ausgerüstet werden.

In DE 35 09 384 A1, DE 42 05 555 A1, DE 40 23 272 A und EP 0 217 598 B1 wird eine Polyolefin-Mehrschichtfolie aus drei, vier bzw. fünf Schichten, wobei die Basisschicht und Zwischenschichten im wesentlichen aus Polypropylenpolymeren und die beiden Außenschichten im wesentlichen aus siegelfähigen Polyolefinpolymeren bestehen, beschrieben, die dadurch gekennzeichnet sind, daß eine siegelfähige Außenschicht Polydialkylsiloxan inkorporiert enthält und diese Siegelschicht nicht coronabehandelt ist und die andere Siegelschicht coronabehandelt worden ist und kein Polydialkysiloxan inkorporiert, sondern auf ihre Außenfläche vorliegen hat, das beim Kontakt der beiden Siegelschichtseiten durch Abklasch übertragen worden ist.

Diese Polyolefin-Mehrschichtfolien erfüllen die Eigenschaften der guten Bedruckbarkeit und der guten Siegelfähigkeit unter Einhaltung der geforderten Optik, aber das Gleitverhalten und somit die Maschinengängigkeit ist nicht homogen über Rollenbreite und -länge.

In EP 135 178 B1 wird eine Folie beschrieben, bei der die siegelfähigen Außenschichten ein mit Alpha-Olefin-Copolymerisat (Basismaterial der Siegelschicht) verträgliches Harz, ein Polydiorganosiloxan und ein Silikat als Antiblockmittel enthalten, was durch die symmetrische Anordnung des Gleitmittels (Polydiorganosiloxan) in beide siegelfähigen Außenschichten zu homogenen Gleitverhalten und somit zur gleichmäßigen Maschinengängigkeit führt, aber die Benetzbarkeit mit insbesondere wasserbasierenden Druckfarben und Klebern aufgrund des ölhaltigen Gleitmittel (Polydiorganosiloxan) nicht zufriedenstellend ist.

In EP 0 027 586 A1 wird eine dreischichtige biaxial orientierte Folie mit hauptsächlich Polypropylen-Polymeren im Kern beschrieben, die in der coronabehandelten Folienaußenschicht weniger Polydialkylsiloxan enthält als in der nicht coronabehandelten Folienaußenschicht. Beide Folienaußenschichten sind siegelfähig. Durch die asymmetrische Konzentrationsanordnung des Polydialkylsiloxans in den jeweiligen Außenschichten wird ein verbessertes Gleitverhalten der Folie erreicht, aber die Bedruckbarkeit der coronabehandelten Folienaußenseite mit wasserbasierenden Auftragssystemen ist nicht ausreichend.

In DE 39 40 173 A1 wird die geforderte Benetzbarkeit mit wässrigen Druckfarben oder wässrigen Beschichtungssystemen durch das Inkorporieren von Polydialkysiloxan als Gleitmittel in den Zwischenschichten (Schicht zwischen dem Kern und den Außenschichten) einer fünfschichtigen Folie verbessert, aber das Gleitverhalten der beiden Folienaußenseiten ist nicht zeitkonstant und die gute Ausgangsbenetzbarkeit der coronabehandelten Folienaußenseite nimmt auch über die Zeit deutlich ab.

In US 4,590,125 wird eine Folie beschrieben, die kein Silikonöl sondern Erucasäureamid (ESA) als Gleitmittel im Kern enthält. Durch die Verwendung von ESA wird eine gute Benetzbarkeit mit wasserbasierenden Druckfarben und Klebern erreicht und die corona behandelte Folienseite ist stets glatter als die nicht corona behandelte Folienseite, aber die geforderten Siegeleigenschaften der nicht corona behandelten Folienseite nehmen über Zeit deutlich ab, d. h. die Siegelnahtfestigkeit ist nach einer längeren Lagerzeit nicht mehr für die Anwendung ausreichend.

In DE 39 40 197 A1 wird eine dreischichtige Folie vorgestellt, die im Kern Polydialkylsiloxan mit einer Viskosität von weniger als 500 mm²/s als Gleitmittel enthält und somit sehr gut zur Aufnahme von wasserbasierenden Druckfarben und Beschichtungssystemen geeignet ist, aber das Gleitverhalten der beiden Folienaußenseiten ist nicht zeitkonstant und die gute Ausgangsbenetzbarkeit der coronabehandelten Folienaußenseite nimmt auch über die Zeit deutlich ab.

Durch all diese Lösungsansätze wird die Ausgangsbenetzbarkeit unmittelbar nach der Herstellung wesentlich verbessert, aber das Gleit-, das Siegelverhalten und die Benetzbarkeit verändern sich deutlich über die Lagerzeit und das Gleitverhalten der Folienaußenseiten ist häufig inhomogen über Bahnbreite und -lange.

Es stellt sich daher die Aufgabe, eine Folie mit verbesserter Benetzbarkeit der corona-, flamm-, plasma- oder fluorbehandelten Folienaußenseite mit gleichzeitig gutem Siegelverhalten der nicht corona-, flamm-, plasma- oder fluorbehandelten Folienaußenseite und der corona-, flamm-, plasma- oder fluorbehandelten Folienaußenseite bereitzustellen, bei der das Gleitverhalten der beiden Folienaußenseiten homogen und zeitunabhängig ist, die guten optischen Eigenschaften unverändert sind und die sich besonders als Einzel- und/oder Verbundfolie für die Verarbeitung auf schnellaufenden vertikal und horizontal arbeitenden Verpackungs- und/oder Verarbeitungsmaschinen verschiedenen Typs aber insbesondere für diskontinuierlich arbeitende Form-Füll-Schließ-Maschinen eignen. Außerdem soll sich die Folie nach konventionellem Verfahren, bei denen mono und/oder biaxial mit Walzen und gegebenenfalls Kluppenrahmen gestreckt wird, problemlos herstellen lassen.

Gelöst wird diese Aufgabe durch eine wenigsten monoaxial gereckten Polypropylen-Mehrschichtfolie, enthaltend mindestens ein Antiblockmittel, ein Antistatikmittel, ein Gleitmittel und eine Gleitmittelkombination, die dadurch gekennzeichnet ist, daß sie zum einen aus einem Erucasäureamid und zum anderen aus einer geringen Menge an Polydimethylsiloxan zusammengesetzt ist und welche durch die Anordnung der beiden Gleitmittelsysteme innerhalb des Folienaufbaus ihre besonderen Vorteile hinsichtlich der Benetzbarkeit, des Siegel- und des Gleitverhaltens zeigen.

In der bevorzugten Ausführungsform handelt es sich um eine dreischichtige einseitig bedruckbare und beidseitig siegelfähige transparente Folie. Bei dieser transparenten Folie kommt die Anordnung des Gleitmittels und der Gleitmittelkombination hinsichtlich des Gleitverhaltens, des Siegelverhaltens und der Benetzbarkeit zum Tragen. Bei der erfindungsgemäß herzustellenden dreischichtigen biaxial orientierten Folie wird das Gleitmittel und die Gleitmittelkombination in einer Konzentration von 500 bis 10.000 ppm, bevorzugt 3.000 bis 7.500 ppm bezogen auf die jeweilige Folienschicht in die Siegelschichten inkorporiert.

Die erfindungsgemäße Gleitmittelkombination ist vorzugsweise aus 400 bis 9.000 ppm, bevorzugt 2.800 bis 6.700 ppm Erucasäureamid und aus 100 bis 1.000 ppm, bevorzugt 200 bis 800 ppm Polydimethylsiloxans zusammengesetzt.

Bei der erfindungsgemäß herzustellenden drei-, vier- bez. fünfschichtigen Folie wird das Gleitmittel Polydimethylsiloxan mit einer mittleren Viskosität von 1.000.000 mm²/s in die nicht corona-, flamm-, plasma- oder fluorbehandelte und die Gleitmittelkombination, bestehend aus Erucasäureamid (ESA) und Polydimethylsiloxan in die corona-, flamm-, plasma- oder fluorbehandelte Folienaußenschicht inkorporiert.

Überraschenderweise ist es durch die erfindungsgemäß Anordnung der zwei unterschiedlichen Gleitmittelsysteme in die jeweiligen Folienaußenschichten gelungen, daß das Siegelverhalten der nicht corona-, flamm-, plasma- oder fluorbehandelten Folienseite nach längerer Lagerzeit nähezu unverändert bleibt und daß die Benetzbarkeit der corona-, flamm-, plasma- oder fluorbehandelten Folienseite deutlich verbessert wurde. Desweiteren war nicht zu erwarten, daß das Gleitverhalten der beiden Folienaußenseiten über Bahnbreite und -länge wesentlich homogener ist.

In der bevorzugten Ausführungsform handelt es sich bei der Folie um eine dreischichtige transparente Folie mit einem A/B/C-Folienaufbau. Die Basisschicht (B), d. h. die von den beiden Siegelschichten A und C eingeschlossene innenliegende Kernschicht (B), der Mehrschichtfolie ist aus Polypropylenpolymer, welches für diesen Anwendungszweck der Folienherstellung ein übliches Polymeres ist.

Übliche Polymere sind z. B. Homopolymere, hochisotaktische Homopolymere mit einem n-heptanunlöslichen Anteil von bis zu 85 Gew.-%, gemessen mittels der ¹³C-NMR-Spektroskopie oder ein Copolymer des Propylens mit Ethylen oder C₄- bis C₈-Olefinen mit mindestens 90 Gew.-% Propylenanteil oder Polypropylen-Polyolefine, die unter Verwendung von Matallocen-Katalysatoren hergestellt wurden. Die üblichen Propylenpolymere der Basisschicht haben zweckmäßigerweise einen Schmelzflußindex (MFI) von 0,5 bis 8, insbesondere 1,5 bis 4 g/10 min bei 230°C und 2,16 kp Belastung (DIN 53 735) und einen Schmelzpunkt von mindestes 140°C, vorzugsweise 150°C oder höher. Die Propylenpolymere besitzen üblicherweise eine Dichte von 0,9 bis 0,91 g/cm³. Weiterhin wird z. B in EP 0 645 426 A1, EP 0 645 417 A1, EP 0 614 758 A1 und EP 614 756 A1 beschrieben, daß der Basisschicht (Kernschicht) auch zusätzlich natürliche und/oder synthetische Kohlenwassersoffharze als Reckhilfen und/oder zur Erhöhung der Foliensteifigkeit, zur Erhöhung der Wasserdampf- und der Sauerstoffbarriere zugegeben werden.

Als Siegelschichtmaterial für die beiden Folienaußenschichten A und C werden zahlreiche polyolefinische Materialien, vorzugsweise nachfolgende eingesetzt:
- statistische Propylen/Ethylen-Copolymere
- statistische Propylen/Buten-1-Copolymere
- statistische Ethylen/Buten-1-Copolymere
- statistische Propylen/Buten-1/Ethylen-Terpolymere
- statistische Ethylen/Octen-1-Copolymere
- Polyolefine, die unter Verwendung von Metallocen-Katalysatoren hergestellt wurden sowie
- Mischungen aus mindestens zwei und/oder mehreren der vorstehenden Polymere.

Die Ausrüstung der Schichten der Mehrschichtfolie mit weiteren allgemein für die Folienanwendung üblichen Additiven und Hilfsmitteln in bewährten Mengen, wie z. B. Antistatik- und Antiblockmitteln, ist möglich. Die üblichen Additive werden bei der Folienherstellung in Form von Masterbatches oder direkt über z. B. Beipaßextruder zugegeben. Unter dem Begriff Masterbatch ist eine Mischung aus dem Kunststoffrohstoff und einer hohen Menge an Additiven zu verstehen. Die Masterbatche können einzelne Additiv oder auch mehrere Additive enthalten. Bevorzugt werden Masterbatche mit mehreren Additiven auf Basis des jeweiligen Kunststoffrohstoffes, in die das Masterbatch eingearbeitet werden sollen. Die Wirkung allgemein bekannter Antistatikmittel ist auf den hydrophilen Molekülteil, der mit dem langkettigen hydrophoben Kohlenwasserstoffrest verbunden ist, zurückzuführen. In den Folien richten sich die Molekülketten so aus, daß der hydrophile Teil an der Oberfläche der Folie Wasser anlagert kann, woraus eine Erniedrigung des Oberflächenwiderstandes resultiert, die letztlich die antistatische Wirkung ausmacht.

Bevorzugte Antistatikmittel sind Alkali-alkansulfonate, polyethermodifizierte, das sind ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit zwei Hydroxyalkyl-(C₁-C₄)-Gruppen substituiert sind, worunter N,N-Bis-(2-hydroxyethyl)-alkylamine mit C₁₀-C₂₀, vorzugsweise C₁₂-C₁₈ als Alkylgruppe besonders geeignet sind. Die wirksame Menge an Antistatikmittel liegt im Bereich von 0,05 bis 3,0 Gew.-%, bezogen auf die jeweilige Schicht.

Wie aus US 4,529,764 hervorgeht, werden weitere geeignete anorganische Zusätze für Polyolefinfolien als Antiblockmittel, wie z. B. Siliciumdioxid, Talkum, Kalkstein, Calciumcarbonat, Tonerde, Kieselsäure, Zinkoxide, Magnesium Silikat, Aluminiumsilikat, Calciumphosphat und andere mehr, sowie mit dem Außenschichtmaterial unverträgliche, d. h. nicht mischbare Polymerisate, wie Polyamide, Polyester, Polycarbonate, Polymethylmethacrylat und dergleichen eingesetzt.

Üblicherweise werden Polyolefine durch Stabilisatoren gegen den thermischen Abbau während der Herstellung und der Verarbeitung zu z. B. Folien stabilisiert. Im EP-A-27 586 und der EP-A-263 882 werden bevorzugt stabilisierend wirkende Verbindungen und ihre Kombinationen für Ethylen-, Propylen- und anderen a-Olefinpolymeren beispielsweise beschrieben. Die für eine ausreichende Stabilisierung notwendige Menge beträgt im allgemeinen 0,1 bis 2,0 Gew.-% bezogen auf die jeweilige Schicht.

Die erfindungsgemäßen Folien können nach bekannten Verfahren wie Laminierung, Beschichtung, Extrusionsbeschichtung oder Schmelzecoextrusion hergestellt werden. Nach der Extrusion und der Verfestigung des Dickfilms auf der Gieß- und/oder Kühlwalze und/oder im Wasserbad und/oder einer Kombination aus beiden wird der Film mindesten monoaxial, bevorzugt biaxial gereckt. Dabei wird der Film in Laufrichtung (längs) in einem Verhältnis von 4:1 bis 7:1, vorzugsweise 4,5:1 bis 5,5:1 bei einer Temperatur von 120°C bis 150°C gereckt. Das Reckverhältnis quer zur Laufrichtung des Films (Querreckverhältnis) liegt in einem Bereich von 8:1 bis 12:1, bevorzugt 9:1 bis 11:1 und das Querrecken des Films wird bei einer Temperatur zwischen 130°C und 170°C vorgenommen. Dem biaxialorientierenden Prozeß (Längs- und Querstreckung) schließt sich eine thermische Fixierung des Films an. Die Thermofixierung wird üblicherweise bei 1 bis 40°C unter der Querrecktemperatur durchgeführt.

Nach Fertigstellung des erfindungsmäßigen Films liegt eine Foliengesamtdicke von 8 bis 50 µm vor.

Die erfindungsgemäßen Folien eignen sich, bedingt durch die guten homogen Siegeleigenschaften der nicht corona-, flamm-, plasma- oder fluorbehandelten Folienaußenseiten und die hervorragende Benetzbarkeit der corona-, flamm-, plasma- oder fluorbehandelten Folienaußenseite besonders für die Herstellung von bedruckten Folienverbunden, die anschließend zu Beuteln mit verbesserter Siegelnahtfestigkeit verarbeitet werden. Darüber hinaus sind die erfindungsgemäßen Folien aufgrund des gleichmäßigen homogenen Gleitverhaltens beider Folienaußenseiten für die diskontinuierliche Verarbeitung auf z. B. Form-Füll-Schließ-Maschinen als Solofolie einsetzbar.

### Beispiel 1

Mittels des oben beschriebenen Coextrusionsverfahrens wird eine dreischichtige biaxial orientierte Polypropylenfolie mit dem Aufbau A/B/C ("A" und "C" = Außenschichten und "B" = Kernschicht bzw. Basisschicht) mit den bevorzugten Reckverhältnissen (längs 4,8:1 und quer 9,6:1), einer mittleren Längsrecktemperatur von 145°C und einer mittleren Querrecktemperatur von 165°C hergestellt. Die coextrudierte Folie ist einseitig auf der "C"-Außenschicht coronabehandelt, dessen Aufbau mit einer Gesamtdicke von 20 µm nachfolgend beschrieben ist:
- Schicht A:: 1,5 µm dick
20,0 Gew.-% eines P/B-Copolymer, bestehend aus 67,0 Gew.-% Polypropylen und 33,0 Gew.-% Buten-1
40,0 Gew.-% P/B/E-Terpolymer, bestehend aus 71 Gew.-% Polypropylen, 19,2 Gew.-% Buten-1 und 9,8 Gew.-% Ethylen
3,0 Gew.-% eines 5%-iges Masterbatches, enthaltend ein kugelförmiges Antiblockmittel mit der Bezeichung Zeeospheres 800 (Fa. ZEELAN, St. Paul USA) bestehend aus einer Silica-Aluminium Legierung mit einem mittleren Durchmesser von 3,0 µm
0,8 Gew.-% Polydimethylsiloxan mit einer mittleren Viskosität von 1.000.000 mm²/s (cSt) bei 25°C
36,2 Gew.-% P/E-Copolymer mit einem 5%-igen Ethylenanteil
- Kernschicht:: 100 Gew.-% Polypropylenpolymeren mit einer Dichte von 0,91 g/cm³ und einem Schmelzflußindex von 3,3 g/10 min bei 230°C und einer Belastung von 2,16 N nach DIN 53 735 bestimmt.
- Schicht C:: 1,0 µm dick
98,70 Gew.-% P/E-Copolymer mit einem 5%-igen Ethylenanteil
0,25 Gew.-% kugelförmiges Antiblockmittel auf Basis von Polymethylmethacrylat (PMMA) mit einem mittleren Partikeldurchmesser von 2,5 µm
0,5 Gew.-% Erucasäureamid
0,5 Gew.-% ethoxyliertes POA Amin
0,05 Gew.-% Polydimethylsiloxan mit einer mittleren Viskosität von 1.000.000 mm²/s (cSt) bei 25°C

### Vergleichsbeispiel 1

Diese Folie wurde mit dem im Beispiel 1 genannten Verfahren hergestellt, aber die Folienzusammensetzung änderte sich wie folgt:
- Schicht A:: 1,0 µm dick
99,0 Gew.-% P/E-Copolymer mit einem 5%-igen Ethylenanteil und 1.000 ppm Siliciumdioxid (SiO₂) mit einem mittleren Partikeldurchmesser von 4,0 µm
0,7 Gew.-% Polydimethylsiloxan mit einer mittleren Viskosität von 1.000.000 mm²/s (cSt) bei 25°C
0,3 Gew.-% HDPE mit einem Schmelzflußindex von 0,12 g/10 min (190/5)
- Kernschicht:: 99,9 Gew.-% Polypropylenpolymeren mit einer Dichte von 0,91 g/cm³ und einem Schmelzflußindex von 3,3 g/10 min bei 230°C und einer Belastung von 2,16 N nach DIN 53 735 bestimmt.
0,1 Gew.-% ethoxylietes POE Amin
- Schicht C:: 1,0 µm dick
99,4 Gew.-% P/E-Copolymer mit einem 5%-igen Ethylenanteil und 1.000 ppm Siliciumdioxid mit einem mittleren Partikeldurchmesser von 4,0 µm
0,3 Gew.-% Polydimethylsiloxan mit einer mittleren Viskosität von 1.000.000 mm²/s (cSt) bei 25°C
0,3 Gew.-% HDPE mit einem Schmelzflußindex von 0,12 g/10 min (190/5)

### Vergleichsbeispiel 2

Diese Folie wurde mit dem im Beispiel 1 genannten Verfahren hergestellt, aber die Folienzusammensetzung änderte sich wie folgt:
- Schicht A:: 1,0 µm dick
20,0 Gew.-% eines P/B-Copolymer, bestehend aus 67,0 Gew.-% Polypropylen und 33,0 Gew.-% Buten-1
40,0 Gew.-% P/B/E-Terpolymer, bestehend aus 71 Gew.-% Polypropylen, 19,2 Gew.-% Buten-1 und 9,8 Gew.-% Ethylen
3,0 Gew.-% eines 5%-iges Masterbatches, enthaltend ein kugelförmiges Antiblockmittel mit der Bezeichung Zeeospheres 800 (Fa. ZEELAN, St. Paul USA) bestehend aus einer Silica-Aluminium Legierung mit einem mittleren Durchmesser von 3,0 µm
0,8 Gew.-% Polydimethylsiloxan mit einer mittleren Viskosität von 1.000.000 mm²/s (cSt) bei 25°C
36,2 Gew.-% P/E-Copolymer mit einem 5%-igen Ethylenanteil
- Kernschicht:: 100 Gew.-% Polypropylenpolymeren mit einer Dichte von 0,91 g/cm³ und einem Schmelzflußindex von 3,3 g/10 min bei 230°C und einer Belastung von 2,16 N nach DIN 53 735 bestimmt.
- Schicht C:: 1,0 µm dick
98,75 Gew.-% P/E-Copolymer mit einem 5%-igen Ethylenanteil
0,25 Gew.-% kugelförmiges Antiblockmittel auf Basis von Polymethylmethacrylat (PMMA) mit einem mittleren Partikeldurchmesser von 2,5 µm

### Vergleichsbeispiel 3

Diese Folie wurde mit dem im Beispiel 1 genannten Verfahren hergestellt, aber die Folienzusammensetzung änderte sich wie folgt:
- Schicht A:: 1,0 µm dick
60,0 Gew.-% P/B/E-Terpolymer, bestehend aus 71 Gew.-% Polypropylen, 19,2 Gew.-% Buten-1 und 9,8 Gew.-% Ethylen
39,75 Gew.-% P/E-Copolymer mit einem 5%-igen Ethylenanteil
0,125 Gew.-% Erucasäureamid
0,125 Gew.-% Siliciumdioxid (SiO₂) mit einem mittleren Partikeldurchmesser von 4 µm
- Kernschicht:: 100 Gew.-% Polypropylenpolymeren mit einer Dichte von 0,91 g/cm³ und einem Schmelzflußindex von 3,3 g/10 min bei 230°C und einer Belastung von 2,16 N nach DIN 53 735 bestimmt.
- Schicht C:: 1,0 µm dick
100,0 Gew.-% P/E-Copolymer mit einem 5%-igen Ethylenanteil mit 1.000 ppm Siliciumdioxid ( = 4,0 µm)

### Vergleichsbeispiel 4

Diese Folie wurde mit dem im Beispiel 1 genannten Verfahren hergestellt, aber die Folienzusammensetzung änderte sich wie folgt:
- Schicht A:: 1,0 µm dick
60,0 Gew.-% P/B/E-Terpolymer, bestehend aus 71 Gew.-% Polypropylen, 19,2 Gew.-% Buten-1 und 9,8 Gew.-% Ethylen
39,875 Gew.-% P/E-Copolymer mit einem 5%-igen Ethylenanteil
0,125 Gew.-% Siliciumdioxid (SiO₂) mit einem mittleren Partikeldurchmesser von 4 µm
- Kernschicht:: 99,85 Gew.-% Polypropylenpolymeren mit einer Dichte von 0,91 g/cm³ und einem Schmelzflußindex von 3,3 g/10 min bei 230°C und einer Belastung von 2,16 N nach DIN 53 735 bestimmt.
0,15 Gew.-% Erucasäureamid
- Schicht C:: 1,0 µm dick
100,0 Gew.-% P/E-Copolymer mit einem 5%-igen Ethylenanteil mit 1.000 ppm Siliciumdioxid ( = 4,0 µm)

In der Tabelle 1 sind die Folieneigenschaften der dreischichtigen biaxial orientierten Folien des Beispiels und der Vergleichsbeispiele 1 bis 4 zusammengefaßt.

Die Überlegenheit der erfindungsgemäß hergestellten dreischichtigen beidseitig siegelfähigen und einseitig bedruckbaren biaxial orientierten transparenten Folie entsprechend des Beispiels 1 bezüglich der homogenen Reibzahlen Folie/Folie und Folie/Metall, ausgedrückt über die Standardabweichung unter ansonsten gleichbleibenden Folieneigenschaften, wie Transparents (Trübung), Glanz und Maschinengängigkeit geht aus Tabelle 1 hervor. Besonders positiv ist bei der Verwendung der erfindungsgemäß hergestellten BOPP-Folie, daß das Siegelverhalten auch über eine Lagerzeit von 100 Tagen zu keiner nennenswerten Veränderung der Siegelnahtfestigkeit führte. Desweiteren war nicht zu erwarten, daß die Bedruckbarkeit der coronabehandelten Folienoberfläche sich nicht über eine Lagerzeit von 100 Tagen nach Herstellung wesentlich geändert hat.

**Tabelle 1**

| Folieneigenschaft | Einheiten | Beispiel 1 | Vergleichsbeispiel 1 | Vergleichsbeispiel 2 | Vergleichsbeispiel 3 | Vergleichsbeispiel 4 |
|---|---|---|---|---|---|---|
| DIN-Reibung VB/Metall | - | 0,26 (0,04) | 0,30 (0,08) | 0,50 (0,09) | 0,45 (0,15) | 0,28 (0,05) |
| DIN-Reibung o. VB/Metall | - | 0,32 (0,04) | 0,25 (0,06) | 0,35 (0,05) | 0,28 (0,05) | 0,45 (0,06) |
| DIN-Reibung VB / VB | - | 0,45 (0,05) | 0,60 (0,07) | 0,7 (0,08) | 0,95 (0,10) | 0,80 (0,09) |
| DIN-Reibung o. VB/o. VB | - | 0,56 (0,04) | 0,50 (0,06) | 0,55 (0,05) | 0,65 (0,15) | 1,00 (0,15) |
| Niederdrucksiegelung, Tₛ = 90°C o. VB/o. VB | N/15 mm | 0,35 (0,40) | 0,05 (0,10) | 0,35 (0,30) | 0,30 (0,00) | 0,35 (0,00 |
| Niederdrucksiegelung, Tₛ = 95°C o. VB/o. VB | N/15 mm | 0,80 (0,80) | 0,45 (0,45) | 0,85 (0,95) | 0,50 (0,05) | 0,55 (0,10) |
| Niederdrucksiegelung, Tₛ = 100°C o. VB/o. VB | N/15 mm | 1,40 (1,40) | 0,60 (0,70) | 1,35 (1,35) | 1,05 (0,35) | 0,95 (0,25) |
| Benetzbarkeit (VB-Folienseite) | mN/m | 44 (42) | 34 (34) | 44 (36) | 44 (42) | 44 (40) |
| Glanz 20° (o. VB/VB) | GE | 95 / 108 | 105 / 110 | 95 / 105 | 90 / 104 | 98 /112 |
| Trübung | % | 1,7 | 1,5 | 1,7 | 1,7 | 1,6 |
| Maschinengängigkeit, (Seite A) | - | + | 0 | - | + | 0 |
| Maschinengängigkeit, (Seite C) | - | ++ | + | + | -- | - |
| o. VB : Folienseite ohne Coronabehandlung VB : Folienseite mit Coronabehandlung | | | | | | |

### Prüfmethoden

### DIN-Reibung

Zur Beurteilung der Gleitfähigkeit einer Folie wird die Prüfvorschrift DIN 53 375 (Bestimmung des Reibverhaltens) herangezogen. Die Reibungsmessung nach dieser Vorschrift dient zur Bestimmung des Verhaltens von Folien bei Reibung zweier Folien gegeneinander und der Reibung einer Folie gegen Metall. Angegeben wird die absolut gemessene DIN-Reibzahl und in Klammern wird die Standardabweichung der Reibzählen angegeben. Die Messungen wurden im Abstand von 25 cm über Bahnbreite und alle 1.000 Laufmeter mehrerer Rollen mit einer Mindestlauflänge von 30.000 Metern jeweils versetzt zu den vorherigen Messungen durchgeführt.

### Siegelnahtfestigkeit:

Unter Siegelnahtfestigkeit wird die Kraft verstanden, die notwendig ist, zwei Folien, die unter definierten Bedingungen (Siegeldruck: 1N/cm², Siegelzeit: 0,5 sec. und glatte Siegelbacken) und den in der Tabelle 1 angegebenen Siegeltemperaturen hergestellte Siegelnaht, senkrecht zur Siegelnaht in Folienlaufrichtung zu trennen. Die Siegelnähtfestigkeit wird mittels einer Zugfestigkeitsprüfmaschine an 15 mm breiten Streifen ermittelt, und die Festigkeit wird in N/15mm angegeben. In Tabelle 1 wird die Anfangssiegelnahtfestigkeit sofort nach Folienherstellung und in Klammern die Siegelnahtfestigkeit, die sich nach einer Lagerzeit von 100 Tagen nach Herstellung ergibt, angegeben.

### Benetzbarkeit:

Die Benetzbarkeit wird mittels des WT-Tests (Wetting Tension Test) nach DIN 53 364 (ASTM D 2587, ISO 8296) geprüft. Unter dem WT-Test versteht man die Benetzbarkeit einer Folie mit einer Prüftinte mit definierter Oberflächenspannung. Sie gibt eine Aussage über die Oberflächenpolarität an und sie wird in mN/m (dyn) angegeben. In Tabelle 1 wird die Oberflächenspannung unmittelbar nach Herstellung und in Klammern die Änderung der Oberflächenspannung, die sich nach einer Lagerzeit von 100 Tagen (Wickelkontakt) nach Produktion ergibt, angegeben.

### Glanz, 20°

Die Glanzmessung 20° wird in Anlehnung an die DIN 67 530 durchgeführt. Als Glanz wird der regulär reflektierte Lichtanteil, bezogen auf einen unter 20° zum Lot einfallenden Lichtstrahl bezeichnet. Der Glanz wird in Glanzeinheiten GE angegeben, die auf einen Schwarzglasstandard bezogen werden. Der Wert des Oberflächenglanzes sollte möglichst hoch sein.

### Trübung

Die Trübung wird hervorgerufen durch Lichtstreuung an auf der Oberfläche und im Innern der Folie verteilten Partikeln wie Gleitmittelteilchen, Antiblockmittel und Verunreinigungen, sowie an Rauhigkeiten der Oberfläche. Die Messung erfolgt nach der Prüfmethode ASTM D 1003 in % Trübung entsprechend % Haze nach ASTM-Prüfnorm D 1003-61m, Procedure A, nach Eichung des Meßgerätes mit Trübungsnormalen zwischen 0,3 und 34 % Trübung (Haze). Angestrebt sind niedrige Trübungswerte.

### Maschinengängigkeit

Mit den Folien aus dem Beispiel 1 und den Vergleichsbeispielen 1 bis 4 wurden auf einer diskontinuierlich arbeitenden (80 bis 115 Takte/min) horizontalen Form-Füll-Shließ-Maschine jeweils 1.000 Kekstrays verpackt. Als Maß der Maschinengängigkeit wurde die jeweilige Qualität der Längs- und Quersiegelnähte herangezogen. Dabei wurde insbesondere auf eine faltenfreie und dichte Siegelnaht geachtet. Die Siegelbedingungen wurden den unterschiedlichen Siegelmaterialien entsprechend angepaßt. Es wurde nachfolgende Klassifizierung vorgenommen:

| | | |
|---|---|---|
| 0,0% bis 0,6% | Packungen mit Falten / undicht | + + |
| 0,7% bis 1,3% | Packungen mit Falten / undicht | + |
| 1,4% bis 2,5% | Packungen mit Falten / undicht | 0 |
| 2,6% bis 5,0% | Packungen mit Falten / undicht | - |
| 5,1% bis 10,0% | Packungen mit Falten / undicht | - - |

## Patentansprüche

1. Wenigstens monoaxial gereckte mehrschichtige Polypropylenfolie, enthaltend ein Polydimethylsiloxan in der nicht corona-, fluor-, flamm oder plasmabehandelten Folienaußenschicht und eine Gleitmittelkombination, bestehend aus Erucasäureamid und Polydimethylsiloxan in der corona-, fluor-, flamm oder plasmabehandelten Folienaußenschicht.

2. Folie nach Anspruch 1, dadurch gekennzeichnet, daß das Polydimethylsiloxan eine mittlere Viskosität von 1.000.000 mm²/s bei 25°C besitzt.

3. Folie nach Anspruch 1 und/oder 2, dadurch gekennzeichnet, daß das Polydimethylsiloxan in einer Konzentration von 0,05 bis 2,0 Gew.-%, bevorzugt 0,6 bis 1,2 Gew.-% in der nicht corona-, fluor-, flamm- oder plasmabehandelten Folienaußenschicht enthalten ist.

4. Folie nach einem und/oder mehreren Ansprüchen 1 bis 3, dadurch gekennzeichnet, daß die nicht corona-, fluor-, flamm- oder plasmabehandelte Folienaußenschicht eine Dicke von 0,5 bis 2,0 µm, bevorzugt 1,2 bis 1,8 µm besitzt.

5. Folie nach einem oder mehreren der Ansprüche 1 bis 4, dadurch gekennzeichnet, daß die nicht corona-, fluor-, flamm- oder plasmabehandelte Folienaußenschicht ein P/B-Copolymeren, bestehend aus 67,0 Gew.-% Polypropylen und 33,0 Gew.-% Buten-1, ein P/B/E-Terpolymeren, bestehend aus 71 Gew.-% Polypropylen, 19,2 Gew.-% Buten-1 und 9,8 Gew.-% Ethylen, ein P/E-Copolymer mit einem 5%-igen Ethylenanteil und ein Antiblockmittel mit einem mittleren Partikeldurchmesser von 3,0 µm, bestehend aus einer Silica-Aluminium-Legierung, enthält.

6. Folie nach einem oder mehreren der Ansprüche 1 bis 5, dadurch gekennzeichnet, daß die Gleitmittelkombination, bestehend aus 400 bis 9.000 ppm, bevorzugt 2.800 bis 6.700 ppm Erucasäureamid und aus 100 bis 1.000 ppm, bevorzugt 200 bis 800 ppm Polydimethylsiloxans in einer Konzentration von 0,05 bis 1,0 Gew.-%, bevorzugt 0,3 bis 0,75 Gew.-% in der corona-, fluor-, flamm- oder plasmabehandelten Folienaußenschicht enthalten ist.

7. Folie nach einem oder mehreren der Ansprüche 1 bis 6, dadurch gekennzeichnet, daß die corona-, fluor-, flamm- oder plasmabehandelte Folienaußenschicht eine Dicke von 0,5 bis 1,5 µm, bevorzugt 0,8 bis 1,2 µm besitzt.

8. Folie nach einem oder mehreren der Ansprüche 1 bis 7, dadurch gekennzeichnet, daß in der corona-, fluor-, flamm- oder plasmabehandelten Folienaußenschicht ein Antistatikmittel und ein kugelförmiges Antiblockmittel mit einem mittleren Partikeldurchmesser von 2,5 µm auf Basis von Polymethylmethacrylat enthalten ist.

9. Folie nach einem oder mehreren der Ansprüche 1 bis 8, dadurch gekennzeichnet, daß die Gesamtfolie eine Dicke von 8 bis 50 µm, bevorzugt 12 bis 35 µm besitzt.
